Europäisches Patentamt

European Patent Office

Office européen des brevets

(11) Publication number: **0 434 890 A1**

# EUROPEAN PATENT APPLICATION

(21) Application number: 90107240.5

(22) Date of filing: 17.04.90

(51) Int. Cl.⁵: **B01J 3/04**, C04B 26/14, //D06B5/16

(30) Priority: 28.11.89 IT 2253189

(43) Date of publication of application: 03.07.91 Bulletin 91/27

(84) Designated Contracting States: AT BE CH DE DK ES FR GB GR LI NL SE

(71) Applicant: CONSTRUZIONI MECCANICHE LEPOLDO POZZI S.P.A.
Via Cavour, 63
I-20040 Agliate, Milan(IT)

(72) Inventor: Pozzi, Alberto
Via Moncucco, 6
I-20048 Carate Brianza, Milan(IT)

(74) Representative: Klausner, Erich et al
c/o Ufficio Internazionale Brevetti Ing. C. Gregorj S.p.A. Via Dogana 1
I-20123 Milano(IT)

(54) Autoclave suited to achieve a marked reduction of the amount of process fluids employed and energy savings.

(57) To achieve a marked reduction of the amount of process fluids employed and energy savings, inside the body (2) of autoclave (1) a closed chamber (20) is provided, said chamber packedly containing the materials (10) to be treated and the hollow space formed between that chamber and the body of the autoclave being filled with a thermally insulating material (30), which is porous and resistant to compression.

Said pourable material being obtained by treating expanded clay granules with a two-component resin, such as Araldite (TM) that can be introduced into the hollow space either directly or at least partly in the form of pre-formed bodies filled with said material.

The autoclave thus obtained is suitable for several treatment processes, especially for dyeing, bleaching, or finishing operations, since chamber (20) can take any shape and adapt itself to contain the material to be processed mounted in the most suitable way,

FIG.5

# "AUTOCLAVE SUITED TO ACHIEVE A MARKED REDUCTION OF THE AMOUNT OF PROCESS FLUIDS EMPLOYED AND ENERGY SAVINGS"

DESCRIPTION

The present invention relates to an autoclave that is suited to achieve a strong reduction of the amount of processing fluids employed and savings in energy consumptions.

In autoclaves, especially in those autoclaves that are suitable to contain textile materials on reels, or in the form of skeins or rolls, that are to be subjected to dyeing, washing, or finishing operations, said operations being usually carried out under pressure, the volume taken by said materials arranged in a stacked fashion resembles a is almost parallelepipedon-shaped with an almost square cross-section, that takes only part of the circular cross-section of the autoclave. The large amount of fluid flowing outside of the outline of the charge of material to be processed must therefore be considered as detrimental in that energy is needed to heat it and circulate it by means of pumps, and moreover a large amount of chemicals is required during the treatment to keep the required bath concentration.

A first known way of reducing the bath ratio, that is the ratio of the employed amount of treatment fluid to the volume of the yarn to be treated, is to keep the upper part of the autoclave under air pressure. A further improvement that has been proposed consists of providing two vertical partitions or walls laterally of the charge of material to be treated material, said partitions or walls defining within the autoclave an upwards-open tank so as to substantially reduce the surface area of the cross-section occupied by the liquid, comprising three circular segments, two lateral ones and an upper one.

Such an arrangement, though achieving a satisfying limitation of the bath ratio, exhibits nevertheless several draw-backs, such as:

persistent, sometimes undesirable foams are formed that can compromise the result of the dyeing operation due to liquid freely flowing over the upper edge of the side walls;

the inversion of the bath circulation, which is needed for properly dyeing some fibers, is difficult to carry out and consequently the effects of the reduction of the bath ratio are cancelled, as almost the whole autoclave is to be kept flooded;

great amounts of heat are lost through the body of the autoclave.

It is therefore the object of the present invention to establish a procedure for implementing an autoclave that is especially useful for dyeing, bleaching and finishing of textile materials, said autoclave being free of the above-mentioned drawbacks and its construction being altogether less expensive.

According to the invention, there is created inside the autoclave a closed chamber of any shape in which the materials to be treated are tightly arranged so as not to waste room, the hollow spaces formed between said closed chamber and the body of the autoclave being filled with a thermally insulating material, said material being resistant to compression and porous, and suited to directly transfer to the structure of the autoclave body the strains from the walls of the closed chamber that is under hydraulic pressure. The treatment fluid is thereby constrained to the inner space of the chamber and, due to the intrinsic thermal insulation properties of the material contained in the hollow spaces, the heat loss is minimized, thereby providing a clear economical advantage in process operation.

Another remarkable advantage attained by the invention is that the chemical treatment bath, circulating only inside the closed chamber, does not come into contact with the autoclave, which can therefore be built with several materials which are less expensive then the materials normally employed, while the use of more precious materials can be limited to the construction of the inside chamber only.

Finally, the limitation of the bath volume to the strictly necessary minimum amounts permits in any case the circulation of the treatment fluid to be easily inverted even when the chamber is completely full of the treatment fluid.

The closed chamber can be obtained by means of walls which are directly constrained on the external structures and form with them hollows to be permanently filled with said material that is resistant to compression, thermally insulating and porous, or by introducing, at least partly, removable, suitably shaped bodies, filled with the same material and inserted between the walls of the closed chamber and the inside wall of the autoclave.

The invention will now be described with reference to a non-limiting illustrative embodiment, shown in the enclosed drawings, in which:

figure 1 schematically shows a cross-section of a dyeing autoclave according to the prior art, containing a charge oof material to be treated;

figure 2 schematically shows a longitudinal section of the autoclave shown in figure 1;

figure 3 schematically shows a cross-section of a dyeing autoclave provided with a known arrangement to limit the volume of the treatment bath;

figure 4 shows the longitudinal section of the autoclave shown in figure 3;

figure 5 shows, in an enlarged scale, the cross-section of an autoclave according to the invention;

figure 6 shows the longitudinal section of the autoclave shown in figure 5;

figure 7 illustratively shows a cross-section of a part of a shaped body made of material which is thermally insulating and resistant to compression, to be inserted into the hollows between the closed treatment chamber and the wall of the autoclave;

figure 8 schematically shows a cross-section of an enlarged detail of the thermally insulating, compression resistant, porous material, used to fill the hollows between the treatment chamber and the autoclave body;

figure 9 shows a perspective view of a closed treatment chamber, of the most frequently used type, having the shape of a parallelepipedon;

figure 10 shows a perspective view of a closed treatment chamber embodying one of the possible shape variants within the scope of the invention;

figure 11 schematically shows a top-plan view of a vertical autoclave enclosing the treatment chamber according to figure 9 and;

figure 12 schematically shows a top-plan view of a autoclave enclosing the treatment chamber according to figure 10.

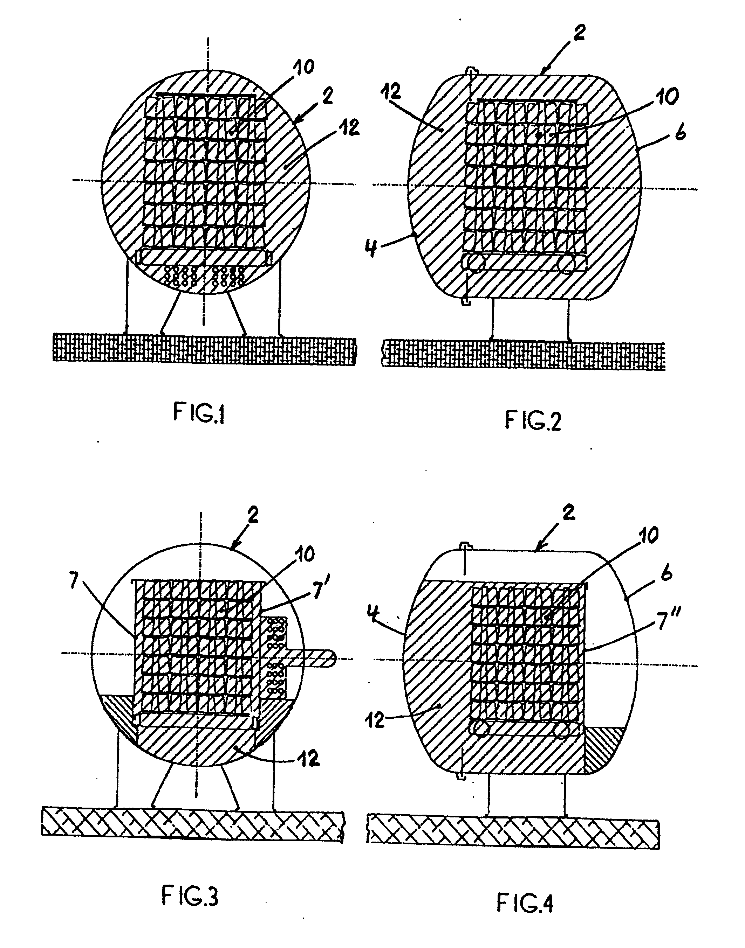

Figures 1 and 2 show a transversal and longitudinal cross-section, respectively, of an autoclave of the conventional type, the body 2 of which has a cylindrical shape, said shape being, from a structural point of view, the most suited one to withstand the stress internally imposed by the pressure of the treatment liquid. The body 2 is provided with two terminal rounded end plates, 4 and 6. It can be noticed that the charge 10 of material to be treated takes a much smaller volume related to the total volume of the autoclave, whereby the autoclave is filled with a large amount of treatment bath 12, as indicated by the dashed area, said volume being absolutely excessive and expensive from the point of view of heat, chemicals and energy consumption for circulating it.

Figures 3 and 4 show a known solution in which, by means of vertical walls 7, 7', 7" the volume of the treatment bath 12, dashed in a similar way as in figures 1 and 2, is limited to the front part and lower part, with a marked improvement in the bath ratio. The non-dashed area, in this case, are normally occupied by compressed air.

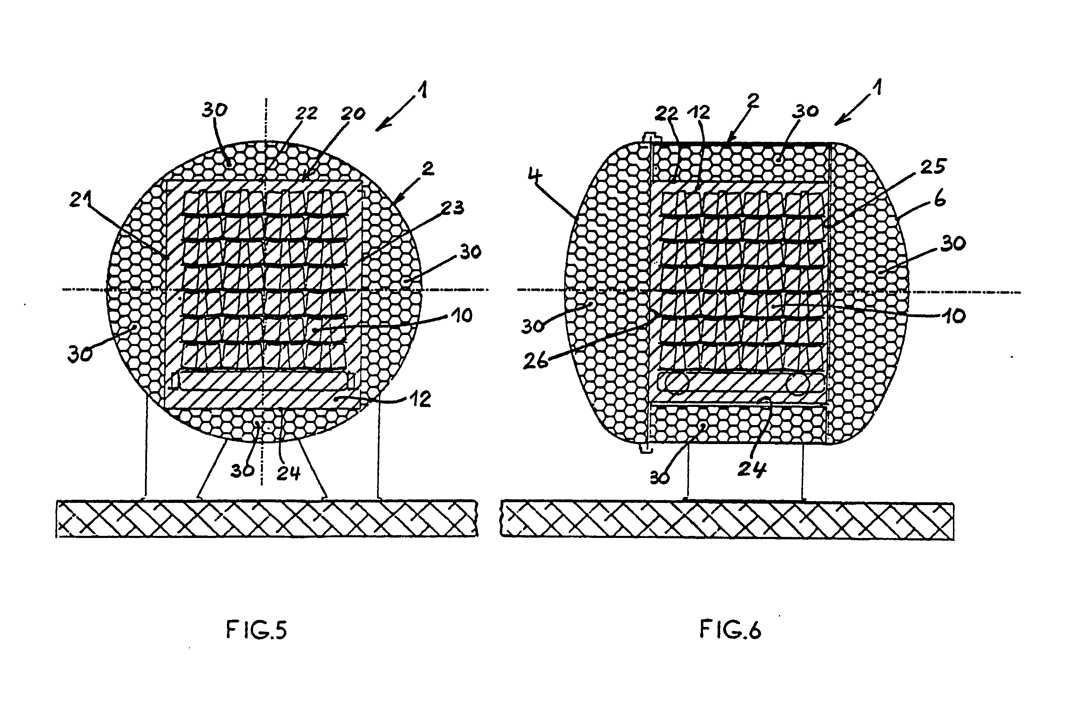

Figures 5 and 6 illustratively show, in a transversal and longitudinal cross-section respectively, an autoclave according to the invention. The autoclave, generally indicated with 1, has a cylindrical body 2 with two rounded end plates 4 and 6. Within the autoclave there is arranged chamber 20, that in the embodiment shown has the shape of a parallelepipedon, said chamber being completely closed on the peripheral walls 21, 22, 23, 24 and on the back-wall 25 as well, while the front opening, that is necessary to load the material, is closed by a wall 26, said wall 26 being tied to bottom 4 and tightly coupled with said opening by means of suitable gaskets.

The size of chamber 20 is so chosen as to tightly contain the charge 10 of material to be treated, the outline of which is of known dimensions, said charge comprising stackable reel trays or conventional insertion structures, said chamber being connected in a known way, by means suitable pipes that cross the wall of the autoclave, with the necessary pump(s) for the circulation of the treatment liquid and with heat exchangers for warming up the treatment liquid (said connections are not shown in the figures). By means of this arrangement, there is achieved the main purpose of reducing to a minimum the bath ratio, while keeping the chamber completely flooded with the treatment liquid, thereby making it easier to carry out the possible inversion of the bath circulation, while the expansion of the processing liquid can occur in a known way, either by means of a compensation circulation outside of the autoclave or by providing an air-pressure chamber in the upper part of the treatment chamber, above the material to be treated.

Chamber 20 is made up of flat, relatively thin walls that can be deformed by the internal pressure, a sheet of a material withstanding the corrosive action of the treatment bath being preferably used for said walls, for example stainless steel.

According to the invention, the hollow spaces formed between the body 2 of the autoclave and the side walls 21 and 23, the upper and lower walls 22 and 24 and the rear wall, as well as the space formed by the rounded front plate 4, are directly filled or occupied by suitable pre-formed bodies, said bodies being in turn filled with a material 30 exhibiting the properties of:

- heat-resisting at a much higher temperature then the treatment temperature, that is at least 170 °C
- low specific gravity
- high degree of thermal insulation
- compression proof of at least 10 kg/cm$^2$
- negligible chemical reactivity
- suited to be poured for an easy and complete filling of all the hollows, thereby obtaining an easy handling in the construction stage.

Said filling is shown schematically in figures 5 and 6 as having an honeycomb shape.

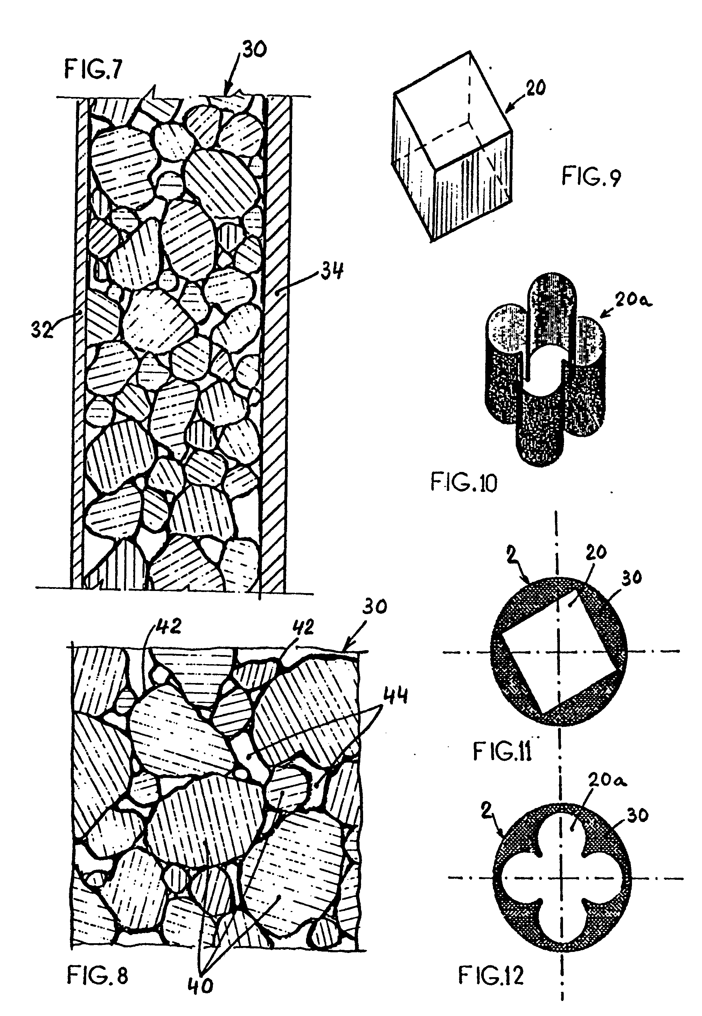

Based on many tests it has been found that a material that can be preferably, but, not exclusively, suited to said purpose, and exhibiting all the above-mentioned features, is a conglomerate comprising expanded clay granules bonded with a two-component resin like ARALDITE (TM) marketed by CIBA. Said mixture, that can be easily prepared inside a normal mixer, is easily flowable and is therefore suited to be poured into any mold provided therefore, within which it polymerizes, thereby forming a mass of surface-coated granules bonded to one another by said resin, said resin leaving however void spaces among the granules, said void spaces being inter-connected and giving rise to a very suitable porosity. In figure 7 is illustratively shown a segment of a shaped body comprising a thin wall 32 that is brought into contact with a wall, for example 25, of the closed chamber 20, the opposite wall 34 lying on the bottom 6 of the autoclave.

Figure 8, showing a detail of conglomerate material 30 as obtained above, shows that the clay granules 40, having for example an average diameter of 4 mm, are inter-connected at their surface by resin 42, indicated in figure with a bold-face line, so that the polymerized block, the apparent crumbliness of the clay notwithstanding, exhibits altogether a compression resistance of about 17 kg/cm$^2$, that is much higher then the internal operating pressure of treatment chamber 20, that is usually between 2 and 3 kg/cm$^2$. The hydrostatic forces acting onto the walls of chamber 20 are thereby transferred, through said conglomerate, to the outer structure of the autoclave, while, due to the porosity of the mass, it is possible to internally ventilate the hollow space.

The conglomerate 30 has a specific gravity of less then 0.5 kg/dm$^3$, a high coefficient of thermal insulation, a negligible chemical reactivity and a low coefficient of dimensional shrinkage, and the resin exhibits a very good adhesion to the surface of the clay granules. The pourability of the mixtures allows filling bodies of any shape to be obtained, said shape being possibly different from that of the hollow spaces between a parallelepipedon-shaped chamber (see figures 9 and 11) and an autoclave body, however complex shapes, such as 20a in figures 10 and 12, being possibly obtained, the application of said bodies being possibly different from the above-mentioned, non limiting example of the dyeing autoclaves

According to the purpose of the invention, an autoclave made up as described, besides achieving very high operation savings due to the reduced volume of the treatment bath, also as far as the employed chemicals are concerned, provides a minimization of the heat losses to the outside due to the insulation provided by the clay conglomerate and to the low total weight of the assembly. Finally, the direct contact of the treatment liquid with the walls of the autoclave being avoided, the external body of the autoclave can be built with less expensive and chemical corrosion-proof materials, the use of said materials being limited to the walls of the inner chamber.

## Claims

1. An autoclave, characterized in that inside its body (2) there is housed a closed chamber (20) of any shape in which the materials (10) to be treated are as tightly arranged as possible, the hollow spaces formed between said closed chamber and the body (2) of the autoclave being filled with a thermally insulating material (30), said material (30) being resistant to compression and porous, preferably of a moldable type, and suited to directly transfer to the structure of the autoclave body the strains from the walls of the closed chamber that is internally pressurized, the circulation of the treatment fluid being thereby constrained in the inner space of the chamber (20).

2. An autoclave as claimed in claim 1, characterized in that the filling material (30) preferably has a low specific gravity, is temperature-proof of at least 170° C, compression-proof of at least 10 Kg/cm$^2$ and is chemical corrosion-proof.

3. An autoclave as claimed in the claims 1 and 2, characterized in that the thermally insulating, compression resistant porous material used to fill the hollows between the walls of the closed treatment chamber (20) and the walls of the autoclave body (2) is preferably a conglomerate comprising expanded clay granules (40) bonded with a two-component resin which coats the external surface of said granules, thereby solidly interconnecting them to obtain a mass that can be first poured and then solidified, having a specific gravity between 0.4 and 0.8 kg/dm$_3$.

4. An autoclave as claimed in the claim 3, characterized in that the two-component resin is ARALDITE (CIBA trademark).

5. An autoclave as claimed in claims 1 to 4, characterized in that the hollows formed between the closed chamber (20) walls and the autoclave body (2) are directly filled with a melt of said thermally insulating, compression resistant porous material (30).

6. An autoclave as claimed in claims 1 to 4, characterized in that in the hollows formed between the closed chamber (20) walls and the autoclave body (2) shaped bodies are inserted that are completely or partly removable and containing said thermal insulating, compression resistant and porous material (30).

7. An autoclave as claimed in one or more of claims 1 to 6, characterized in that the autoclave body (2) is built with any material, such a metal that may not necessarily be chemically corrosion-proof, while the closed chamber (20) which contains the process liquid is built with a material, like a metal, which is chemically corrosion proof, if said liquid exhibits a chemical reactivity.

FIG.1

FIG.2

FIG.3

FIG.4

FIG.5

FIG.6

FIG.7

30

34

32

FIG.9

20

FIG.10

20a

FIG.8

42  42  30

44

40

FIG.11

2  20  30

FIG.12

2  20a  30

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 609 062 (BARRIQUAND) <br> * Abstract; page 9, line 1 - page 10, line 11; page 12, lines 15-30; figures 1-4; claims 7,20 * <br> — — — | 1 | B 01 <br> J 3/04 <br> C 04 B 26/14 // <br> D 06 B 5/16 |
| A | | 6 | |
| A | EP-A-0 286 509 (BARRIQUAND) <br> * Abstract; column 1, line 45 - column 2, line 23; column 2, lines 32-39; column 7, lines 4-29; claims 8,10,11; figures 17-20 * <br> — — — | 1 | |
| A | FR-A-2 162 253 (TERZARIOL) <br> * Whole document * <br> — — — | 2,3 | |
| A | US-A-4 689 358 (SCHORR et al.) <br> * Abstract; column 1, lines 5-10; column 3, lines 7-14; column 3, lines 37-50; example 1 * <br> — — — — — | 3 | |

|  | TECHNICAL FIELDS SEARCHED (Int. Cl.5) |
|---|---|
| | B 01 J <br> C <br> 04 B <br> D 06 B <br> F 16 L |

The present search report has been drawn up for all claims

| Place of search | Date of completion of search | Examiner |
|---|---|---|
| The Hague | 22 March 91 | STEVNSBORG N. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document